# EUROPEAN PATENT APPLICATION

(11) **EP 4 822 589 A1**
(43) Date of publication of application: **14.10.2026**
(21) Application number: 24899430.3
(22) Date of filing: 24.09.2024
(51) Int. Cl.: G06K 19/077

(54) **EPD MODULE AND ELECTRONIC SHELF LABEL**

(30) Priority: 04.12.2023 CN 202311650058
(71) Applicant: Hanshow Technology Co., Ltd., Jiaxing, Zhejiang 314031 (CN)
(72) Inventor: WANG, Yanwei, Jiaxing, Zhejiang 314031 (CN); LI, Yanchen, Jiaxing, Zhejiang 314031 (CN); ZHAO, Ziming, Jiaxing, Zhejiang 314031 (CN); WU, Zhaoyun, Jiaxing, Zhejiang 314031 (CN); DU, Xubing, Jiaxing, Zhejiang 314031 (CN); CUI, Shezhan, Jiaxing, Zhejiang 314031 (CN)
(74) Representative: Boult Wade Tennant LLP
(86) International application number: PCT/CN2024/120518
(87) International publication number: WO 2025/118786

(57) **Abstract**

The present disclosure integrates a solar cell assembly, a light intensity detection assembly, and a display assembly into an integrated EPD module, and all electronic components are integrated on a TFT array and a printed circuit board. The solar cell assembly is integrated on the display assembly and the NFC antenna is integrated on the printed circuit board to replace the conventional antenna on the PCB. In the present disclosure, the power relationship among the solar cell assembly, the energy storage assembly, and a load is managed through the charge/discharge management module and the corresponding charge/discharge management method, thereby achieving intelligent power usage allocation.

## Description

### RELATED APPLICATION

The present disclosure claims priority to Chinese Invention Patent Application No. 202311650058.6 filed on December 4, 2023, which is hereby incorporated by reference in its entirety.

### TECHNICAL FIELD

The present disclosure relates to the technical field of electronic shelf labels, and particularly to an Electronic Paper Display (EPD) module and an electronic shelf label.

### BACKGROUND

Electronic shelf labels (ESL) are electronic display devices capable of sending and receiving information. They are mainly used in supermarkets, convenience stores, pharmacies, and other venues to display price information. The electronic shelf labels are placed on shelves and serve as electronic replacements for conventional paper price tags. Each electronic shelf label is connected to the store's computer database via a wired or wireless network to receive the latest product information and display it on the label's screen. By integrating the shelves into a computerized system-specifically, by enabling remote interaction between the identifiers (including information such as price, category, inventory, and origin) of products on the shelves and the backend Product Management System-ESLs significantly expand the functionality of ordinary price tags, eliminating the need for manual replacement of the price tags, and realizing price consistency between the checkout counters and the shelves.

The primary service functions of ESLs include on-screen price update, as well as synchronize information management between the front-end and back-end systems. The key components include a display device, a power supply device, a Near Field Communication (NFC) element, and a main control chip. The display device is mainly an Electronic Paper Display (EPD), also known as an electronic ink screen. The power supply device mainly includes primary and secondary batteries. In addition to these, the existing electronic shelf label also incorporates components such as a solar cell and a photosensor.

Chinese Patent CN202220239095.2 discloses a solar electronic shelf label including a rear housing. The rear housing is provided with a solar panel and is formed with a wiring groove extending to a front end face thereof, with a wire arranged inside the wiring groove. The solar panel is connected to a control board via the wire, and the control board is connected to a screen. By adopting the solar panel, the patent solves the technical problem that the service life of the electronic shelf label is affected by limited battery capacity.

Chinese Patent CN202011461029.1 discloses an electronic tag, an electronic shelf label and a control method thereof. The electronic tag includes an electronic tag body, and a display unit, an illumination unit, a first collection unit, and a control unit disposed on the electronic tag body. The first collection unit is configured to collect the light intensity of an environment of the electronic tag body, so as to obtain a current light intensity. The control unit is configured to judge whether the current light intensity is lower than a preset light intensity, and send an illumination instruction when the current light intensity is lower than the preset light intensity. According to the solution, by judging the light intensity, the electronic tag is enabled to display tag content even in poor light conditions, so as to improve the usability of the electronic tag.

However, in the prior art, the aforementioned solar or photosensitive components are discrete components that are electrically connected and integrated via printed circuit boards (PCBs). This imposes great limitations on the miniaturization, reliability, manufacturability, and cost-effectiveness of light-powered ESL products. In addition, existing ESLs that use secondary batteries suffer from poor charge/discharge management, lack over-discharge resistance, and have poor maintainability.

### SUMMARY

To address the deficiencies in the prior art, the present disclosure provides an Electronic Paper Display (EPD) module and an electronic shelf label. The present disclosure solves the problems that the prior art adopts discrete components for integration, resulting in deficiencies in miniaturization, reliability, manufacturability, and cost-effectiveness, as well as poor charge/discharge management, lack of over-discharge resistance, and poor maintainability.

According to embodiments of the present disclosure, there is provided an Electronic Paper Display (EPD) module, including a display assembly, a solar cell assembly, a printed circuit board, and an energy storage assembly.

The display assembly includes a substrate, a Thin Film Transistor (TFT) array, an Electronic Paper Film (FPL), and a cover plate that are stacked in sequence, and the TFT array is provided with a drive circuit corresponding to the FPL.

The solar cell assembly includes a solar cell disposed to cover an outer surface of the cover plate and positioned to avoid overlapping with a display area of the FPL, and an electrode of the solar cell is electrically connected to the TFT array.

The printed circuit board is electrically connected to the TFT array, and the printed circuit board is provided with a control circuit.

The energy storage assembly is configured to receive energy from the solar cell assembly and output electric energy, and is electrically connected to the printed circuit board.

The present disclosure further provides an electronic shelf label, including the aforementioned EPD module.

Compared to the prior art, the present disclosure achieves the following advantageous effects:
1. The present disclosure provides a highly integrated all-in-one EPD module, integrating all electronic components onto the TFT array and the printed circuit board. There are no additional discrete components, eliminating the need for one-to-one circuit connection and integration via extra circuit boards. This greatly enhances the miniaturization of the electronic shelf label. Meanwhile, the highly integrated product also reduces the demand for extra components, thereby improving production efficiency and reducing costs.
2. The EPD module of the present disclosure integrates a solar cell assembly, eliminating complicated and unreliable electrical connections-such as lead wires-associated with the s separate solar cells used in conventional light-powered electronic shelf labels. This is conducive to improving product reliability and promoting product miniaturization and cost reduction.

### BRIEF DESCRIPTION OF DRAWINGS

FIG. 1 is a schematic diagram of a module architecture according to an embodiment of the present disclosure.
FIG. 2 is a schematic plan view of modules according to an embodiment of the present disclosure.
FIG. 3 is a schematic plan view of a solar cell and a photosensor according to an embodiment of the present disclosure.
FIG. 4 is a schematic plan view of an assembling process of modules according to an embodiment of the present disclosure.
FIG. 5a is a cross-sectional view taken along line B-B' according to an embodiment of the present disclosure.
FIG. 5b is a longitudinal cross-sectional view of modules in a normal region according to an embodiment of the present disclosure.
FIG. 6a is a cross-sectional view taken along line C-C' according to an embodiment of the present disclosure.
FIG. 6b is a longitudinal cross-sectional view of modules in a solar cell region according to an embodiment of the present disclosure.
FIG. 7a is a cross-sectional view taken along line D-D' according to an embodiment of the present disclosure.
FIG. 7b is a longitudinal cross-sectional view of modules in a photosensor region according to an embodiment of the present disclosure.
FIG. 8 is a schematic diagram of a charge/discharge module architecture according to an embodiment of the present disclosure.
FIG. 9 is a logic flowchart of a management process of a charge/discharge module according to an embodiment of the present disclosure.

In the above drawings:
"Driver IC" refers to an IC, i.e., a drive circuit;
"EPD_bus" refers to an EPD bus;
"Solar" refers to a solar cell; and
"TFT substrate" refers to a combination of a substrate and a TFT array.

### DESCRIPTION OF EMBODIMENTS

The technical solutions of the present disclosure will be further described with reference to the drawings and embodiments.

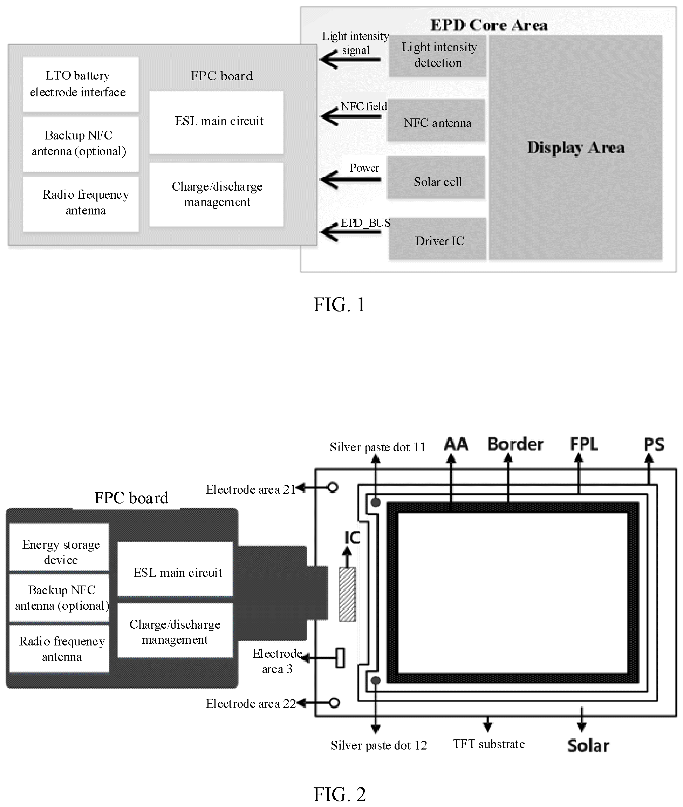

As shown in FIG. 1, an embodiment of the present disclosure provides an Electronic Paper Display (EPD) module, including an electronic paper display assembly, a solar cell assembly, a printed circuit board and an energy storage assembly.

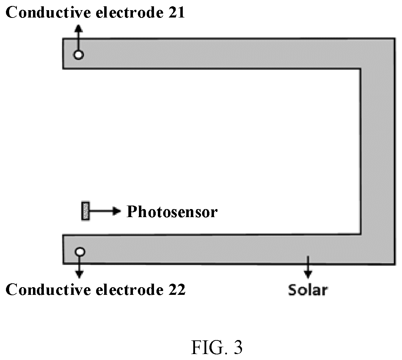

As shown in FIGS. 2, 3, and, in the embodiment, the display assembly includes a substrate, a thin film transistor (TFT) array, an electronic paper film (FPL), and a cover plate that are stacked in sequence. It should be noted that the central area surrounded by a border on the surface of the FPL serves as a display area of the FPL, which is used to display text such as price information on an electronic shelf label. In the embodiment, edge-sealing adhesive is disposed on an outer peripheral side of the FPL, so as to seal the FPL onto the TFT array in cooperation with the cover plate, thereby preventing impurities such as dust from adhering to the surface of the FPL or entering a gap between the FPL and the TFT array, which would otherwise affect the display function. In the embodiment, the cover plate may be specifically made of polystyrene (PS). Optionally, the substrate may be a glass substrate or a flexible polyimide (PI) substrate. In this embodiment, a flexible PI substrate may be used to improve the flexibility and bending resistance of the entire product.

The printed circuit board may include a Flexible Printed Circuit (FPC), a Rigid Printed Circuit Board (PCB), or a combination of both. In the embodiment, the FPC may be used to enhance the flexibility of the product. While featuring bendability, the FPC can integrally carry various circuit components and integrate other electronic components, thereby simplifying the manufacturing process. A strip-shaped structure extends from one side of the FPC and overlaps with an edge of the TFT array to establish an electrical connection. A protective adhesive is further disposed to cover an overlapping joint between the FPC and the TFT array, so as to reinforce the connection strength and protects the joint, thereby preventing an external force from compromising the connection stability. Meanwhile, the strip-shaped structure is bendable so that the FPC is folded and stacked on an outer side surface of the substrate, allowing the strip-shaped structure to be completely shielded by the substrate, thereby preventing an increase in footprint during packaging, and further reducing product dimensions. In addition, the relatively rigid substrate can also provide protection for the flexible FPC. A control circuit is disposed on the FPC. In the embodiment, the control circuit includes an ESL main circuit and control circuits for other electronic components, with a Micro Control Unit (MCU) serving as the processor to manage circuit programs.

The TFT array is provided with a drive circuit corresponding to the FPL. The drive circuit is electrically connected to the ESL main circuit on the FPC via an EPD bus. To further improve the completeness of the product, a temperature collection circuit and a Near Field Communication (NFC) antenna are also integrated on the TFT array, and the NFC antenna is electrically connected to the TFT array. By replacing the conventional independent antenna component additionally connected to the PCB with the integrated NFC antenna, not only are the performance of the antenna and other related components improved and costs reduced, but the device volume is also minimized.

Correspondingly, the FPC is further provided with a backup NFC antenna, a radio frequency antenna, and a Light Emitting Diode (LED). The backup NFC antenna and the radio frequency antenna are electrically connected to the FPC. The NFC antenna disposed on the FPC not only serves as a backup antenna, but can also work in conjunction with an NFC near-field coupled power supply to supply power when the solar cell provides insufficient power under poor lighting conditions. The NFC antenna and the radio frequency antenna can also work together to transmit signals to a central management computer, thereby updating shelf information in real time.

In the embodiment, the solar cell assembly includes a solar cell disposed to cover the outer surface of the cover plate and positioned to avoid overlapping with the display area of the FPL. The material of the solar cell includes perovskite, Organic Photovoltaic (OPV), amorphous silicon, or Dye-Sensitized Solar Cell (DSSC). In the embodiment, OPV or perovskite may be adopted to enhance impact resistance and shatter resistance, hereby preventing damage to the externally mounted solar cell caused by accidental collision.

In order to improve applicability, the solar cell may be a single solar cell, or a series, parallel, or series-parallel combination of multiple solar cells, allowing for selection based on various requirements. In terms of shape, the solar cell may be U-shaped, frame-shaped, strip-shaped, L-shaped, or other configurations, ensuring that the specific shape of the solar cell matches the shape of the substrate on which the solar cell is mounted. As shown in FIG. 3, optionally, this embodiment employs a right-angle U-shape for the solar cell to match the profile of the substrate and to avoid the connection area of the FPC at the opening of the solar cell. In the embodiment, methods such as adhesive bonding, thermal compression bonding, and Ultraviolet (UV) curing can be adopted to integrate the solar cell with the display assembly, allowing the solar cell to exactly wrap around the outer periphery of the FPL. Except for the opening end, the solar cell covers the entire area between the boundary area of the FPL and the edge of the substrate, thereby maximizing the utilization of the substrate surface and improving the light energy conversion efficiency.

In the embodiment, the energy storage assembly is a secondary battery, which may be disposed on the FPC or the TFT. In the embodiment, the energy storage assembly is mounted on the FPC to form an integrated structure and is electrically connected to the FPC. Conventional ternary lithium-ion batteries and lithium iron phosphate batteries suffer from significant irreversible deterioration in capacity, current output capability, and self-discharge rate after prolonged deep over-discharge, resulting in poor maintainability of the electronic shelf label. Therefore, the energy storage assembly in the embodiment adopts a lithium titanate battery, which offers advantages such as compact size, over-discharge resistance, anti-swelling property, long cycle life, high charge/discharge rate, and high safety. The lithium titanate batteries specifically include ultra-thin pouch lithium titanate batteries, cylindrical lithium titanate batteries, and coin lithium titanate batteries. Optionally, this embodiment adopts an ultra-thin pouch lithium titanate battery or a small-sized coin battery to accommodate the overall flexible structure.

Optionally, the embodiment further includes a light intensity detection assembly. Specifically, the light intensity detection assembly includes a photosensor, which is disposed on the working surface of the TFT array in an area not covered by the FPL. In the embodiment, the photosensor is positioned on the opening side of the U-shaped solar cell. The light intensity detection assembly further includes a sampling and amplifying circuit and an Analog-to-Digital (AD) conversion circuit which are disposed on the FPC. The photosensor converts ambient light into an electrical signal through photoelectric conversion, and the collected electrical signal is transmitted to the control circuit via the sampling and amplifying circuit and the AD conversion circuit. After being processed by the MCU in the ESL main circuit, the light intensity detection is achieved, thereby better coordinating with the solar cell assembly. Meanwhile, the light intensity detection assembly may also cooperate with the LED through the ESL main circuit, turning the LED on or off under different lighting conditions to better display shelf information.

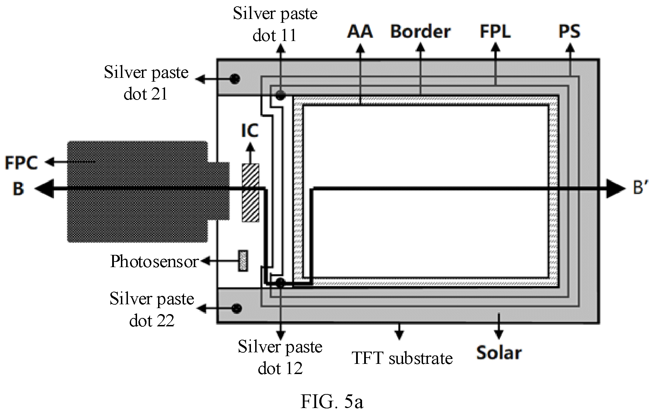

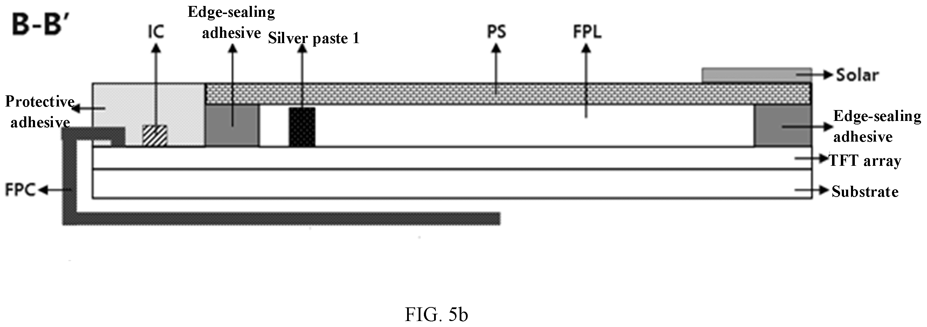

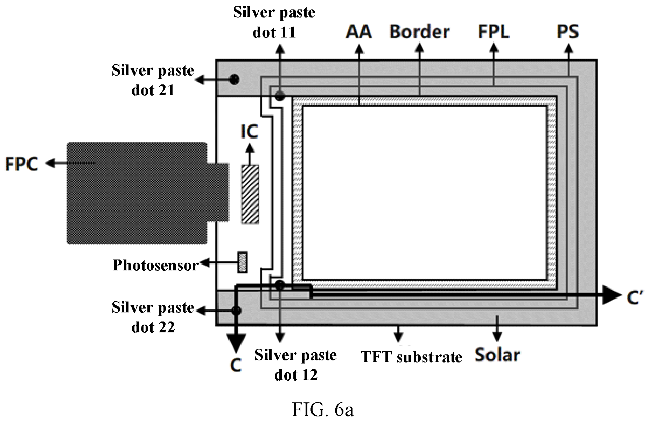

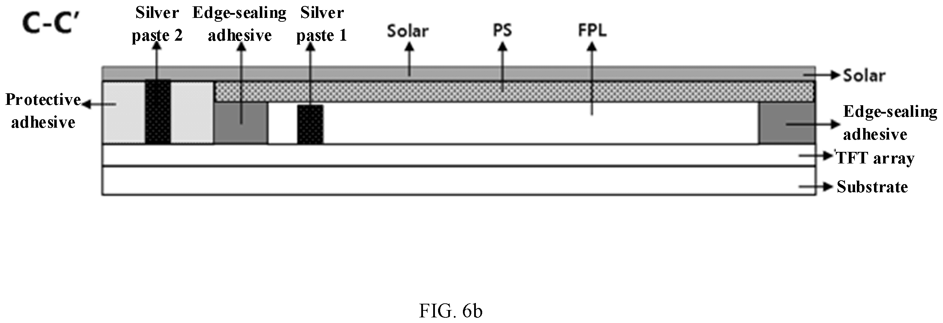

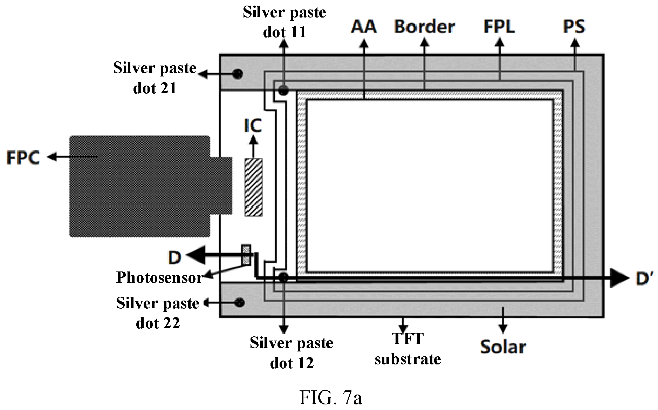

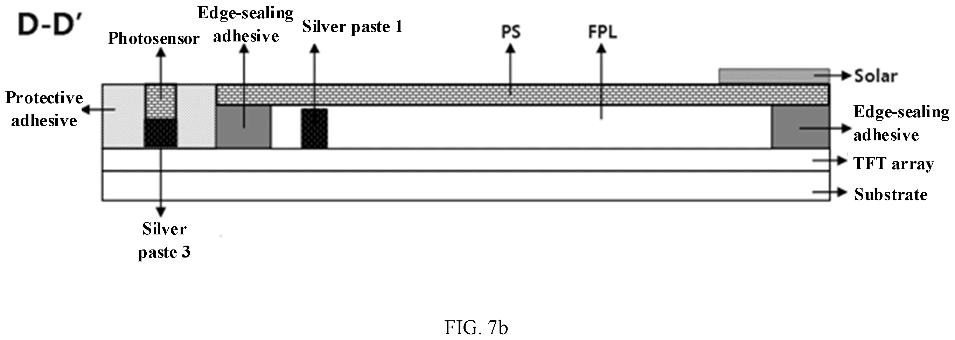

As shown in FIGS. 5a to 7b, regarding the specific circuit connection, the solar cell enables a conductive electrode to be directly led out via a lead, a flexible circuit board, and a copper foil, and the conductive electrode is electrically connected to the TFT array by means of silver paste dot connection, soldering, crimping, or ion blast bonding, so as to supply power to the drive circuit on the TFT array, and also supply power to the ESL main circuit and the energy storage assembly on the FPC through the electrical connection between the TFT array and the FPC. Optionally, the FPL is electrically connected to the TFT array via a silver paste dot structure, and is connected to the drive circuit through the TFT array. The TFT array is provided with a conductive electrode for electrical connection with the solar cell, and this conductive electrode is electrically connected to the conductive electrode on the solar cell via a silver paste dot. The electrical connection via silver paste dots makes the integrated module structure of the embodiment more compact and more reliable.

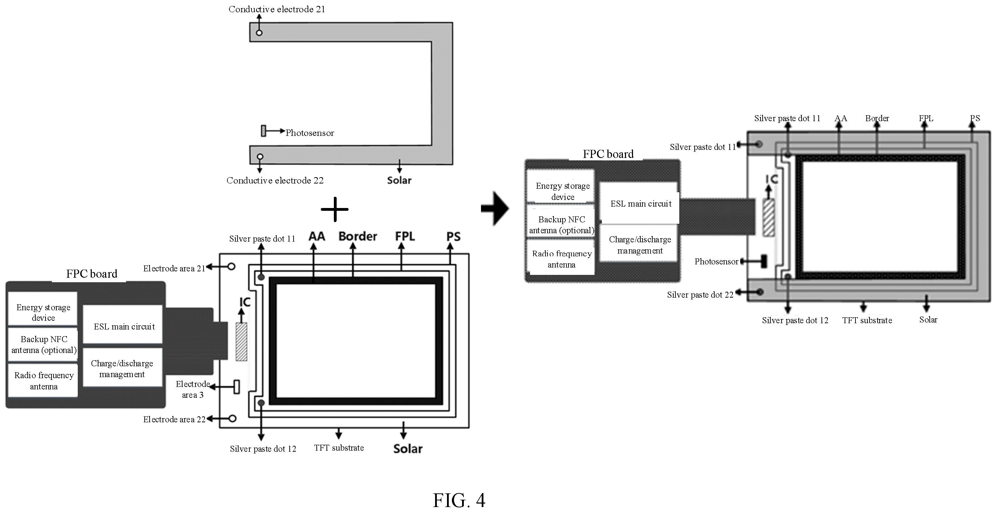

In a further specific solution, the FPL and the TFT array are soldered via two silver paste dots. The two conductive electrodes on the solar cell and the conductive electrodes on the TFT array are also soldered via two silver paste dots. The photosensor is soldered to the TFT array via an independently arranged silver paste dot. As shown in FIGS. 2, 3, and 4, the FPL and the TFT array are soldered via silver paste dots 11 and 12. Conductive electrodes 21 and 22 on the solar cell and electrode areas 21 and 22 on the TFT array (i.e., the conductive electrodes on the TFT array) are soldered via the silver paste dots 21 and 22. The photosensor is soldered to the electrode area 3 on the TFT array via a silver paste dot 3. That is, the soldering of the FPL, the solar cell, and the photosensor is completed through a three-step soldering process, eliminating the need to solder each solder joint one by one, thereby improving processing efficiency and simplifying the process steps.

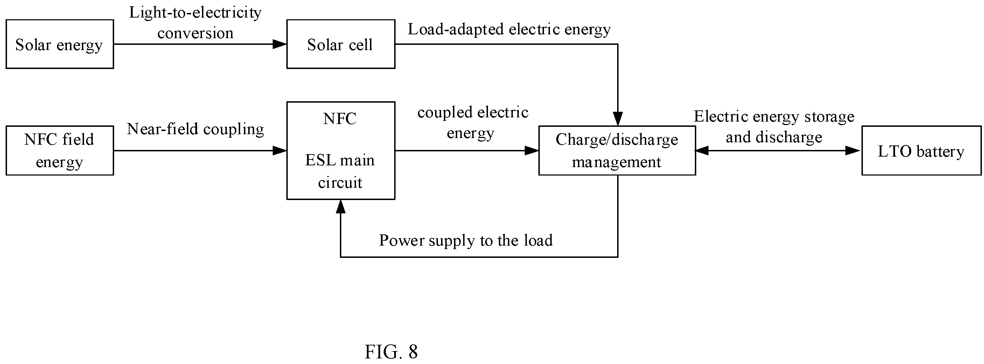

As shown in FIG. 8, the EPD module in the embodiment further includes a charge/discharge management module, which is integrated on the FPC and electrically connected to the solar cell assembly and/or the NFC antenna, the energy storage assembly, the control circuit, and the display assembly. The charge/discharge management module may also be electrically connected to the photosensor. The solar cell assembly and/or the NFC antenna converts solar energy or near-field coupling energy into electric energy, so as to charge the energy storage assembly or supply power to a load through charge/discharge management.

It should be noted that the EPD module of the embodiment has a standby state and an operating state. The standby state refers to a mode in which the FPL screen does not need to refresh display information, and only some electronic components require a small current to remain powered and active. The operating state refers to a mode in which the FPL screen normally refreshes the display information, the drive circuit needs to provide control, and the ESL main circuit on the FPC also needs to operate normally, thus requiring a large current to sustain the operating state. Therefore, in the embodiment, when the EPD module is in the standby state, the solar cell supplies a small current required for standby to the TFT array, the drive circuit, the ESL main circuit on the FPC, and other electronic devices, while excess power is stored in the energy storage assembly. When the EPD module is in the operating state, the energy storage assembly outputs a large current to the various loads on the FPC and the TFT array to maintain their normal operation.

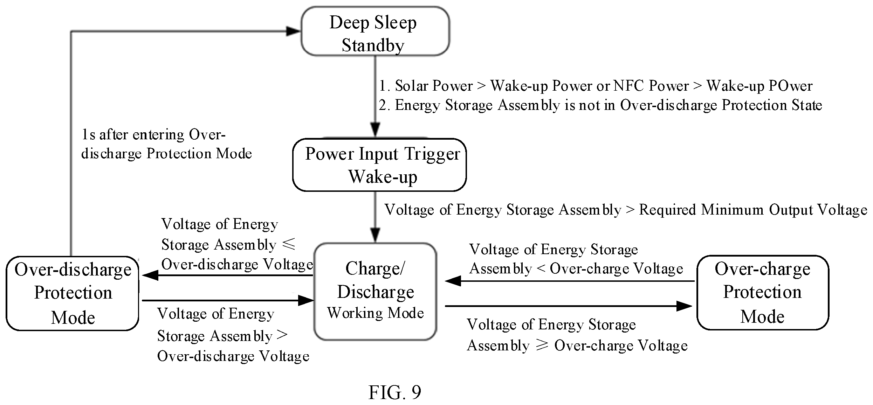

As shown in FIG. 9, correspondingly, a charge/discharge management method implemented by the charge/discharge management module includes the following steps:
S1: entering a charge/discharge working mode: allowing the energy storage assembly to charge and discharge, and allowing the solar cell and/or the NFC antenna to directly supply power to a load;
S2: when the voltage of the energy storage assembly is greater than or equal to an overcharge voltage, entering an overcharge protection mode: prohibiting the energy storage assembly from charging but allowing the energy storage assembly to output power (e.g., electric energy), and allowing the solar cell and/or the NFC antenna to directly supply power to the load; otherwise, switching from the overcharge protection mode to the charge/discharge working mode;
S3: when the voltage of the energy storage assembly is less than or equal to an over-discharge voltage, entering an over-discharge protection mode: prohibiting the energy storage assembly from outputting power (e.g., the energy storage assembly serves as a power source to output electric energy), and allowing the solar cell assembly and/or the NFC antenna to charge the energy storage assembly using electric energy converted from solar energy or near-field coupling energy; otherwise, switching from the over-discharge protection mode to the charge/discharge working mode;
S4: after entering the over-discharge protection mode and elapsing a standby buffer time, the charge/discharge management module entering a deep sleep standby state; optionally, the standby buffer time is 0.5 to 2 seconds; in the embodiment, the charge/discharge management module enters the deep sleep standby state 1 second after entering the over-discharge protection mode;
S5: when the power supplied by the solar cell assembly or the NFC antenna is greater than a wake-up power and the energy storage assembly is not in the over-discharge protection mode, the power input triggering a wake-up to exit the deep sleep standby state; and
S6: when the voltage of the energy storage assembly is greater than a minimum output voltage, entering the charge/discharge working mode.

Optionally, in the embodiment, no voltage-current conversion devices are required between the energy storage assembly and the load; power output from the energy storage assembly can be achieved simply through the switching action of the circuits on the FPC. By controlling the maximum output voltage of the solar cell assembly or the maximum output voltage of the coupled power coupled formed by the NFC antenna, the energy storage assembly can be charged using an external power source through the switching actions of the circuits on the TFT array and the FPC, eliminating the need for voltage-current conversion devices.

By managing the power relationship among the solar cell assembly, the energy storage assembly, and the load through the charge/discharge management module and the corresponding charge/discharge management method, power usage can be intelligently allocated. This approach provides reliable overcharge and over-discharge protection, effectively maintains the operating state of the energy storage assembly, extends its service life, enhances the device reliability, and facilitates management and maintenance.

The embodiment further provides an electronic shelf label, which includes the aforementioned EPD module and charge/discharge management module, and employs the aforementioned charge/discharge management method for management. As a result, the electronic shelf label features the characteristics of compact size, high reliability, highly automated production, and low cost, while also facilitating the management and maintenance of the electronic shelf label.

Finally, it should be noted that the above embodiments are merely intended to illustrate, rather than limit, the technical solutions of the present disclosure. Although the present disclosure has been described in detail with reference to preferred embodiments, those skilled in the art will appreciate that any modifications, combinations, sub-combinations and substitutions made to the technical solutions of the present disclosure without departing from the spirit and scope thereof shall fall within the scope of the appended claims of the present disclosure.

## Claims

1. An Electronic Paper Display (EPD) module, comprising a display assembly, a solar cell assembly, a printed circuit board, and an energy storage assembly;
wherein the display assembly comprises a substrate, a Thin Film Transistor (TFT) array, an Electronic Paper Film (FPL), and a cover plate that are stacked in sequence, and the TFT array is provided with a drive circuit corresponding to the FPL;
the solar cell assembly comprises a solar cell disposed to cover an outer surface of the cover plate and positioned to avoid overlapping with a display area of the FPL, and an electrode of the solar cell is electrically connected to the TFT array;
the printed circuit board is electrically connected to the TFT array, and the printed circuit board is provided with a control circuit; and
the energy storage assembly is configured to receive energy from the solar cell assembly and output electric energy, and is electrically connected to the printed circuit board.

2. The EPD module according to claim 1, wherein the printed circuit board comprises one of a Flexible Printed Circuit (FPC) and a Rigid Printed Circuit Board (PCB), or a combination of both.

3. The EPD module according to claim 1, wherein the TFT array is further provided with a Near Field Communication (NFC) antenna electrically connected to the TFT array.

4. The EPD module according to claim 1, wherein a material of the solar cell comprises perovskite, Organic Photovoltaic (OPV), amorphous silicon, or Dye-Sensitized Solar Cell (DSSC).

5. The EPD module according to claim 1, wherein the printed circuit board is further provided with a backup NFC antenna and a radio frequency antenna, both of which are electrically connected to the printed circuit board.

6. The EPD module according to claim 1, wherein the energy storage assembly comprises a lithium titanate battery.

7. The EPD module according to claim 1, wherein the TFT array is provided with a conductive electrode for electrical connection with the solar cell via a silver paste dot.

8. The EPD module according to claim 7, wherein the solar cell is provided with two conductive electrodes, which are soldered to the conductive electrode on the TFT array via the silver paste dots.

9. The EPD module according to any one of claims 1 to 8, further comprising a light intensity detection assembly, which comprises a photosensor disposed on a working surface of the TFT array in an area not covered by the FPL.

10. The EPD module according to claim 9, wherein the light intensity detection assembly further comprises a sampling and amplifying circuit and an Analog-to-Digital (AD) conversion circuit which are disposed on the printed circuit board; and
the photosensor is configured to convert ambient light into an electrical signal through photoelectric conversion, and the sampling and amplifying circuit and the AD conversion circuit are configured to transmit the electrical signal to the control circuit.

11. The EPD module according to any one of claims 1 to 8, further comprising a charge/discharge management module integrated on the printed circuit board, wherein the charge/discharge management module is electrically connected to the solar cell assembly and/or the NFC antenna, the energy storage assembly, the control circuit, and the display assembly, respectively; and
the charge/discharge management module is configured to implement a charge/discharge management method that comprises the following steps:
S1: entering a charge/discharge working mode: allowing the energy storage assembly to charge and discharge, and allowing the solar cell and/or the NFC antenna to directly supply power to a load;
S2: when a voltage of the energy storage assembly is greater than or equal to an overcharge voltage, entering an overcharge protection mode: prohibiting the energy storage assembly from charging but allowing the energy storage assembly to output power, and allowing the solar cell and/or the NFC antenna to directly supply power to the load; otherwise, switching from the overcharge protection mode to the charge/discharge working mode;
S3: when the voltage of the energy storage assembly is less than or equal to an over-discharge voltage, entering an over-discharge protection mode: prohibiting the energy storage assembly from outputting power, and allowing the solar cell assembly and/or the NFC antenna to charge the energy storage assembly using electric energy converted from solar energy or near-field coupling energy; otherwise, switching from the over-discharge protection mode to the charge/discharge working mode;
S4: after entering the over-discharge protection mode and elapsing a standby buffer time, the charge/discharge management module entering a deep sleep standby state;
S5: when the power supplied by the solar cell assembly or the NFC antenna is greater than a wake-up power and the energy storage assembly is not in the over-discharge protection mode, the power input triggering a wake-up to exit the deep sleep standby state; and
S6: when the voltage of the energy storage assembly is greater than a minimum output voltage, entering the charge/discharge working mode.

12. An electronic shelf label, comprising the EPD module according to any one of claims 1 to 11.
